# EUROPÄISCHE PATENTANMELDUNG

(11) **EP 1 262 261 A2**
(43) Veröffentlichungstag der Anmeldung: **04.12.2002**
(21) Anmeldenummer: 02006981.1
(22) Anmeldetag: 27.03.2002
(51) Int. Cl.: B23B 5/16, B23G 1/00

(54) **Kuppmaschine und Verfahren zum Bearbeiten eines Werkstücks an einer Kuppmaschine**

(30) Priorität: 27.04.2001 DE 10120916
(71) Anmelder: Schumag Aktiengesellschaft, D-52076 Aachen (DE)
(72) Erfinder: Weller, Alois, 40699 Erkrath (DE)
(74) Vertreter: Castell, Klaus, Dr.-Ing.

(57) **Zusammenfassung**

Um ein Werkstück mittels einer Kuppmaschine zu bearbeiten, schlägt die Erfindung eine Kuppmaschine vor, bei welcher ein Werkstück mittels einer Klemmeinrichtung (1,2) in einer Bearbeitungsposition gehalten wird, wobei die Klemmeinrichtung wenigstens einen rotierenden Klemmteller (1) aufweist und der rotierende Klemmteller zuzüglich zu der Rotation wenigstens einen weiteren Freiheitsgrad umfasst.

## Beschreibung

Die Erfindung betrifft eine Kuppmaschine, bei welcher ein Werkstück mittels einer Klemmeinrichtung in einer Bearbeitungsposition gehalten wird, wobei die Klemmeinrichtung wenigstens einen rotierenden Klemmteller aufweist. Darüber hinaus betrifft die Erfindung ein Verfahren, bei welchem das Werkstück mittels eines rotierenden Klemmtellers zu einer Klemmeinrichtung geführt und dort mittels wenigstens des Klemmtellers geklemmt wird. Hierbei wird das geklemmte Werkstück mit einer rotierenden Schneideinrichtung bearbeitet, wobei die Klemmeinrichtung nach der Bearbeitung gelöst wird, und das Werkstück nach dem Lösen aus der Klemmeinrichtung geführt wird.

Kuppmaschinen werden insbesondere eingesetzt, um ein Werkstück spanend zu bearbeiten. Beispielsweise wird mittels einer Kuppmaschine an einem Schaftende einer Schraube im Bereich des Gewindeansatzes eine Fase angebracht. Hierbei wird das Werkstück einer Klemmeinrichtung der Kuppmaschine zugeführt, wobei dann eine Schneideinrichtung der Kuppmaschine das mittels der Klemmeinrichtung fixierte Werkstück bearbeitet.

Bekannt ist beispielsweise eine Klemmeinrichtung, bei der die Klemmeinrichtung aus einer rotatorisch bewegten Klemmbacke und einer translatorisch bewegten Klemmbacke besteht. Wobei die translatorische Bewegung lotrecht zu der Drehachse der rotatorisch bewegten Klemmbacke stattfindet. Die Klemmeinrichtung, insbesondere die rotatorisch bewegte Klemmbacke und die translatorisch bewegte Klemmbacke, ist ortsfest zu der Schneideinrichtung der Kuppmaschine angeordnet. Hierbei gelangt ein Werkstück in die ortsfeste Klemmeinrichtung, wobei die Schneideinrichtung der Kuppmaschine an das eingeklemmte Werkstück herangeführt wird, sodass das Werkstück bearbeitet werden kann.

Es hat sich gezeigt, dass es hierbei nachteilig ist, dass die relativ hochtourig laufende Spindel des Schneidmessers der Schneideinrichtung verfahrbar gelagert sein muss. Um beispielsweise die enormen Kräfte während der Bearbeitung eines mit einer hohen Schnittgeschwindigkeit umlaufenden Spindel aufnehmen zu können, ist eine entsprechend großdimensionierte Lagerung der Antriebsspindel der Schneideeinrichtung vorgesehen. Ein Bewegen der Schneideeinrichtung einschließlich der Antriebsspindel ist jedoch konstruktiv sehr aufwendig.

Der Erfindung liegt die Aufgabe zu Grunde, eine Kuppmaschine, insbesondere eine Klemmeinrichtung sowie eine Schneideinrichtung einer Kuppmaschine, weiter zu entwickeln.

Die Aufgabe der Erfindung wird von einer Kuppmaschine gelöst, bei welcher ein Werkstück mittels einer Klemmeinrichtung in einer Bearbeitungsposition gehalten wird, wobei die Klemmeinrichtung wenigstens einen rotierenden Klemmteller aufweist und der rotierende Klemmteller zu der Rotation wenigstens einen weiteren Freiheitsgrad aufweist.

Die erfindungsgemäße Kuppmaschine hat hierbei zwei besonders hervorstechende Vorteile, da sie zum einen ein Bewegen der relativ massiv gelagerten Spindel bzw. Welle der Messer der Schneideinrichtung vermeidet und zum anderen die Werkstückzuführung in die Klemmeinrichtung hinein sowie die Werkstückabführung aus der Klemmeinrichtung heraus dahingehen verbessert, dass die Werkstücke unmittelbar in der Klemmeinrichtung durch den Klemmteller geführt werden können. Hierbei wird ein nicht vorgesehenes Verklemmen der einzelnen Werkstücke, insbesondere auch ein Verklemmen von Schraubenköpfen, unterbunden, sodass der Transport und die Bearbeitung der Werkstücke weniger störungsanfällig verläuft. Hierdurch ist die Gefahr einer Störung im Bearbeitungszyklus einer Kuppmaschine verringert.

Hierzu ist es besonders vorteilhaft, wenn der rotierende Klemmteller insbesondere in der Bearbeitungsposition relativ zu der Schneideinrichtung entlang seiner Drehachse bewegbar ist.

Um diese Mobilität des rotierenden Klemmtellers zu realisieren, ist es vorteilhaft, wenn der rotierende Klemmteller an einem Schlitten angeordnet ist. Der Schlitten übernimmt hierbei durch eine geeignete Lagerung dann vorteilhafter Weise unter anderem auch die Führung des rotierenden Klemmtellers.

Eine bevorzugte Ausführungsvariante sieht hierbei vor, dass der Schlitten auf einer Längsachse der Schneideinrichtung bewegbar ist. Somit sind der Schlitten sowie folglich auch der daran angebrachte rotierende Klemmteller insbesondere während der Bearbeitung des Werkstückes zu den Messern der Schneideinrichtung bewegbar.

Besonders vorteilhaft ist es, wenn der rotierende Klemmteller mit einer weiteren Klemmbacke des Schlittens wechselwirkt. Insbesondere, wenn sich das Werkstück in der Bearbeitungsposition befindet ist das Werkstück hierbei mit dem rotierenden Klemmteller und der weiteren Klemmbacke fixiert.

Eine weitere Ausführungsvariante sieht vor, dass der rotierende Klemmteller wenigstens eine Werkstückaufnahme aufweist. Mittels der Werkstückaufnahme ist das Werkstück insbesondere hinsichtlich des Klemmtellers vorteilhaft vorjustiert, sodass der Transport in die Bearbeitungsposition hinein sowie aus der Bearbeitungsposition hinaus durch die Werkstückaufnahme unterstützt wird. Aber auch beim Klemmvorgang selbst ist das Werkstück hierbei wesentlich sicherer fixiert, wobei auch die Bearbeitungsposition des Werkstückes relativ zu der Schneideinrichtung wesentlich genauer und sicherer eingehalten werden kann.

Um eine möglichst große Anzahl an verschiedenen Werkstücken mittels der Kuppmaschine bearbeiten zu können, ist es von Vorteil, wenn der rotierende Klemmteller auswechselbar ist. Beispielsweise ist der Klemmteller auf einer Welle mittels einer Schraubverbindung fixiert, sodass er zum einen eine sichere Verbindung zu der Welle aufweist und zum anderen schnell und einfach auszutauschen ist. Beispielsweise wird für unterschiedliche, zu bearbeitende Schrauben jeweils ein entsprechender Klemmteller an die rotierende Welle angebracht.

Nach der Erfindung ist vorgeschlagen, dass der rotierende Klemmteller auf einer rotierenden Halterung angeordnet ist. Hierbei ist die rotierende Halterung vorzugsweise auf einer Welle angeordnet. Die rotierende Halterung kann hierbei mit einer Vielzahl von Fixiermöglichkeiten an der Welle gelagert sein.

Eine bevorzugte Ausführungsform sieht vor, dass die Halterung des Klemmtellers einen Zahnradkranz aufweist. Somit wird ein zur Bewegung des Klemmtellers einzuleitendes Drehmoment unmittelbar in der Nähe des Klemmtellers eingeleitet.

Um das Drehmoment einzuleiten, kann der Zahnradkranz der Halterung vorteilhafter Weise mit einem Zahnrad eines Antriebes in Wirkverbindung stehen. Vorteilhaft ist es hierbei, dass das Drehmoment in unmittelbarer Nähe des rotierenden Klemmtellers eingeleitet wird, sodass die Welle auf der die Halterung angeordnet ist, einer wesentlich geringeren Belastung ausgesetzt ist. Es ist jedoch möglich, dass der Antrieb des rotierenden Klemmtellers auch an einer anderen Stelle angeordnet ist, insbesondere auch an der Welle der Halterung.

Verfahrensmäßig wird die Aufgabe der Erfindung von einem Verfahren zum Bearbeiten eines Werkstückes gelöst, bei welchem das Werkstück mittels eines rotierenden Klemmtellers zu einer Klemmeinrichtung geführt und dort mittels wenigstens eines Klemmtellers geklemmt wird, und bei welchem das geklemmte Werkstück mit einer rotierenden Schneideinrichtung bearbeitet wird. Nach der Bearbeitung wird die Klemmeinrichtung gelöst, wobei das Werkstück dann aus der Klemmeinrichtung geführt wird. Zum Bearbeiten des Werkstücks wird der rotierende Klemmteller relativ entlang seiner Drehachse bewegt.

Das erfindungsgemäße Verfahren erlaubt eine wesentlich vereinfachte und somit kostengünstigere Konstruktion einer Kuppmaschine. Der rotierende Klemmteller wird hierbei vorzugsweise mittels eines Schlittens geführt, wobei der Schlitten zu der Schneideinrichtung der Kuppmaschine rührbar ist, und das Werkstück somit entsprechend bearbeitet werden kann.

Es ist vorteilhaft, wenn das Werkstück mit einer zweiten Klemmbacke der Klemmeinrichtung geklemmt wird. Hierbei ist es unerheblich, in welcher Form die zweite Klemmbacke gestaltet ist. Beispielsweise wird sie um eine feststehende Achse derart angelenkt, dass ein oberer Bereich der Klemmbacke mit dem rotierenden Klemmteller zusammenwirkt.

Die zweite Klemmbacke kann aber auch als einfache translatorisch bewegbare Klemmbacke ausgeführt sein, die während des Klemmens gegen den Klemmteller geführt wird. Auch ein zweiter rotierende Klemmteller, welcher mit dem ersten rotierenden Klemmteller zusammenwirkt ist eine mögliche Option, falls die Werkstückzuführung entsprechend ausgelegt ist.

Weitere Ziele, Eigenschaften und Vorteile vorliegender Erfindung werden anhand der Beschreibung anliegender Zeichnung erläutert, in welcher beispielhaft eine erfindungsgemäße Klemmeinrichtung dargestellt ist.

Es zeigen
Figur 1 eine erfindungsgemäße Klemmeinrichtung schematisch in einer Draufsicht und
Figur 2 die erfindungsgemäße Klemmeinrichtung in einer schematischen Seitenansicht.

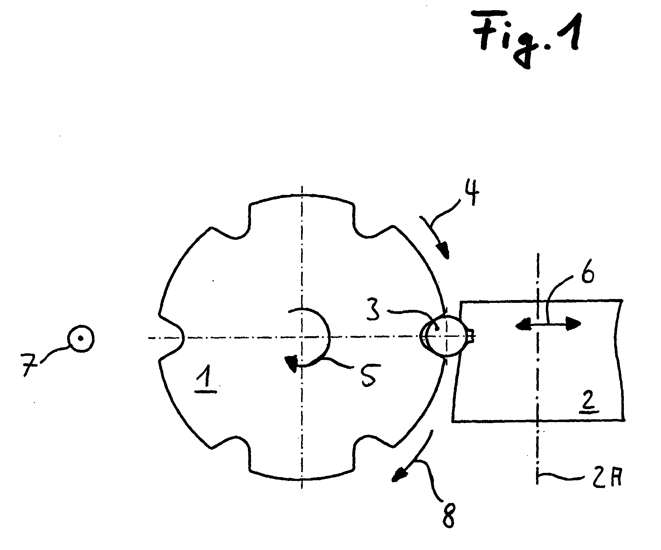

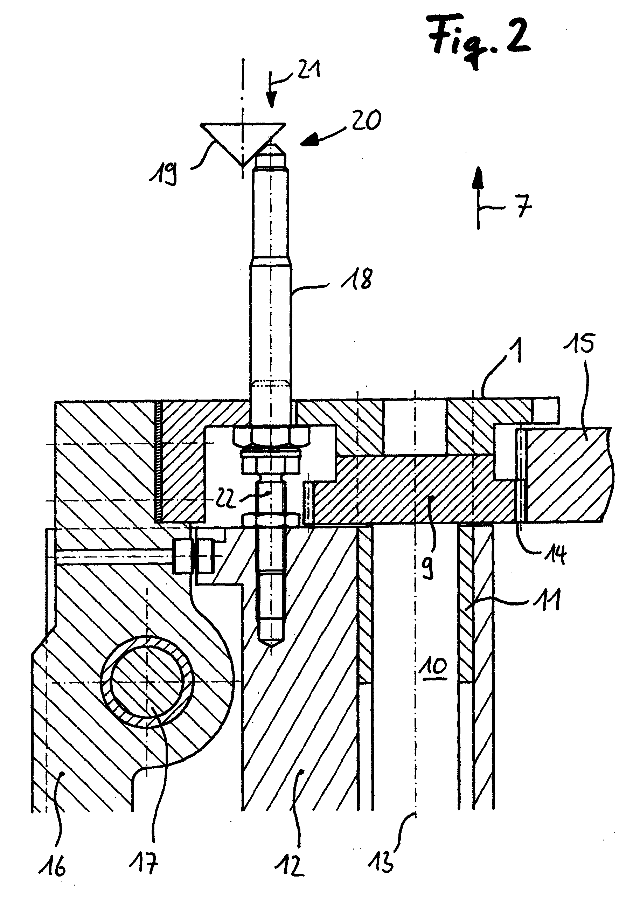

Die Figur 1 zeigt einen rotierenden Klemmteller 1 und eine um eine feststehende Achse 2A angelenkte Klemmbacke 2, wobei zwischen dem rotierenden Klemmteller 1 und der Klemmbacke 2 ein Werkstück 3 in einer Bearbeitungsposition geklemmt ist. Das Werkstück 3 wird zuvor in einer Transportebene aus einer Richtung 4 unter anderem mittels einer Rotationsbewegung 5 des Klemmtellers 1 in die Bearbeitungsposition geführt und dort durch eine translatorische Bewegung 6 des oberen Bereiches der Klemmbacke 2 gegen den rotierenden Klemmteller 1 geklemmt. Hierbei erfolgt die Rotation 5 des rotierenden Klemmtellers 1 getaktet. Ist das Werkstück 3 derart zwischen dem rotierenden Klemmteller 1 und der Klemmbacke 2 geklemmt, verfährt ein Schlitten 12 (siehe Fig. 2) mit samt dem Klemmteller 1, der Klemmbacke 2 und dem geklemmten Werkstück 3 in eine Richtung 7 zu einer Schneideinrichtung 19 (siehe Fig. 2), wobei das Werkstück 3 mittels der Schneideinrichtung 19 bearbeitet wird. Nach der Bearbeitung des Werkstücks 3 durch die Schneideinrichtung 19 verfahren der Klemmteller 1, die Klemmbacke 2 und das geklemmte Werkstück 3 entgegengesetzt der Richtung 7 in die Transportebene zurück, wobei die Klemmbacke 2 von dem rotierenden Klemmteller 1 weggeführt wird und das nicht mehr geklemmte Werkstück 3 anschließend in eine Richtung 8 aus der Bearbeitungsposition herausgeführt wird.

Der in der Figur 2 gezeigte rotierende Klemmteller 1 hat eine Halterung 9, welche wiederum an einer drehbar gelagerten Welle 10 angeordnet ist. Die Welle 10 ist hierbei mit einem Lager 11 an dem bewegbaren Schlitten 12 gelagert. Der Schlitten 12 ist entlang einer Drehachse 13 in Richtung 7 sowie in der entgegengesetzten Richtung bewegbar.

Die Halterung 9 weist einen Zahnkranz 14 auf, der mit einer Antriebseinheit 15 in Wirkverbindung steht. Die Antriebseinheit 15 bewegt hierbei den rotierenden Klemmteller 1 getaktet um die Drehachse 13 herum.

Der Schlitten 12 umfasst weiterhin eine Klemmbacke 16, welche an einer Achse 17 schwenkbar an dem Schlitten 12 gelagert ist.

Der Klemmteller 1 sowie die Klemmbacke 16 des bewegbaren Schlittens 12 befinden sich in einer Klemmposition, in welcher eine Schraube 18 in einer Bearbeitungsposition fixiert ist. Der Schlitten 12 befindet sich hierbei in einem oberen Todpunkt, sodass ein Schneidmesser 19 an einen Bereich 20 des Werkstücks 18 eine Fase anbringt. Um den rotierenden Klemmteller 1 sowie die Klemmbacke 16 hinsichtlich der parallel zu der Drehachse 13 verlaufenden Schnittkräfte 21 zu entlasten, weist der bewegbare Schlitten 12 einen verstellbaren Werkstückgegenhalter 22 auf.

## Patentansprüche

1. Kuppmaschine, bei welcher ein Werkstück (3; 18) mittels einer Klemmeinrichtung in einer Bearbeitungsposition gehalten wird, wobei die Klemmeinrichtung wenigstens einen rotierenden Klemmteller (1) aufweist, ***dadurch gekennzeichnet, dass*** der rotierende Klemmteller (1) zuzüglich zu der Rotation wenigstens einen weiteren Freiheitsgrad aufweist.

2. Kuppmaschine nach Anspruch 1, ***dadurch gekennzeichnet, dass*** der rotierende Klemmteller (1) insbesondere in der Bearbeitungsposition relativ zu einer Schneideinrichtung (19) entlang seiner Drehachse (13) bewegbar ist.

3. Kuppmaschine nach einem der Ansprüche 1 oder 2, ***dadurch gekennzeichnet, dass*** der rotierende Klemmteller (1) an einem Schlitten (12) angeordnet ist.

4. Kuppmaschine nach einem der Ansprüche 1 bis 3, ***dadurch gekennzeichnet, dass*** der Schlitten (12) auf einer Längsachse einer Schneideinrichtung bewegbar ist.

5. Kuppmaschine nach einem der Ansprüche 1 bis 4, ***dadurch gekennzeichnet, dass*** der rotierende Klemmteller (1) mit einer weiteren Klemmbacke (2; 16) vorzugsweise eines Schlittens (12) wechselwirkt.

6. Kuppmaschine nach einem der Ansprüche 1 bis 5, ***dadurch gekennzeichnet, dass*** der rotierende Klemmteller (1) wenigstens eine Werkstückaufnahme aufweist.

7. Kuppmaschine nach einem der Ansprüche 1 bis 6, ***dadurch gekennzeichnet, dass*** der rotierende Klemmteller (1) auswechselbar ist.

8. Kuppmaschine nach einem der Ansprüche 1 bis 7, ***dadurch gekennzeichnet, dass*** der rotierende Klemmteller (1) auf einer rotierenden Halterung (9) angeordnet ist.

9. Kuppmaschine nach Anspruch 8, ***dadurch gekennzeichnet, dass*** die Halterung (9) des Klemmtellers (1) einen Zahnkranz (14) aufweist.

10. Kuppmaschine nach einem der Ansprüche 8 oder 9, ***dadurch gekennzeichnet, dass*** der Zahnkranz (14) der Halterung (9) in Wirkverbindung mit einem Antriebszahnrad (15) steht.

11. Verfahren zum Bearbeiten eines Werkstückes (3; 18), wobei das Werkstück (3; 18) mittels eines rotierenden Klemmtellers (1) zu einer Klemmeinrichtung geführt und dort mittels wenigstens des Klemmtellers (1) geklemmt wird, wobei das geklemmte Werkstück (3; 18) mit einer rotierenden Schneideinrichtung (19) bearbeitet wird, wobei die Klemmeinrichtung nach der Bearbeitung gelöst wird, und wobei das Werkstück (3; 18) nach dem Lösen aus der Klemmeinrichtung geführt wird, ***dadurch gekennzeichnet, dass*** der rotierende Klemmteller (1) zum Bearbeiten des Werkstücks (3; 18) relativ entlang seiner Drehachse (13) bewegt wird.
